# EUROPÄISCHE PATENTSCHRIFT

(11) **EP 1 104 371 B1**
(45) Veröffentlichungstag und Bekanntmachung des Hinweises auf die Patenterteilung: **11.06.2003**
(21) Anmeldenummer: 99942839.4
(22) Anmeldetag: 10.08.1999
(51) Int. Cl.: B60T 7/12

(54) **VERFAHREN ZUR BEMESSUNG DER BREMSKRAFT**
METHOD FOR BRAKE FORCE DIMENSIONING
PROCEDE POUR PROPORTIONNER LA FORCE DE FREINAGE

(30) Priorität: 10.08.1998 DE 19836017
(43) Veröffentlichungstag der Anmeldung: 06.06.2001
(73) Patentinhaber: Bayerische Motoren Werke Aktiengesellschaft, 80809 München (DE)
(72) Erfinder: MANSEICHER, Josef, D-85635 Hoehenkirchen (DE); SIEPKER, Achim, D-82194 Groebenzell (DE); SCHMIDT, Hans, D-85716 Unterschleissheim (DE)
(86) Internationale Anmeldenummer: EP9905834
(87) Internationale Veröffentlichungsnummer: WO00009375

(56) Entgegenhaltungen:
- EP-A- 0 275 985
- EP-A- 0 314 641
- EP-A- 0 456 097
- EP-A- 0 595 510

## Beschreibung

Die Erfindung betrifft ein Verfahren zur Bemessung der Bremskraft an einer Vorderachse und einer Hinterachse eines durch selbsttätigen Bremseneingriff festgestellten Fahrzeugs.

Bei Kraftfahrzeugen, die mit einer Betriebsbremse ausgestattet sind, die einen selbsttätigen Bremseneingriff ermöglicht, können verschiedene Sicherheits- und Komfortfunktionen realisiert werden. Derartige Bremssysteme arbeiten beispielsweise elektromechanisch oder elektrohydraulisch und sind bevorzugt als brake-bywire-Systeme ausgeführt. So kann z. B. das zum Stillstand gekommene Fahrzeug festgestellt werden, indem das Bremssystem die Radbremsen ohne Zutun des Fahrers aktiviert. Um bei möglichst geringem Energieeinsatz (beispielsweise für die Elektromotore an den Radbremsen oder für die Hydraulikpumpe) eine ausreichende Feststellwirkung zu erzielen, werden hierbei die Radbremsen sowohl an der Vorderals auch an der Hinterachse aktiviert.

Werden bei einem derartig festgestellten Fahrzeug nun gleichzeitig Lenkmanöver durchgeführt, wie dies beispielsweise beim Rangieren des Fahrzeugs der Fall ist, so ergibt sich für die Lenkbewegungen ein höherer Kraftbedarf als dies bei ungebremsten, stillstehenden Vorderrädern der Fall wäre. Diese höheren Lenkkräfte müssen durch entsprechende Energiebereitstellung für ein kraftunterstützendes oder ein fremdkraftbetätigtes Lenksystem aufgebracht werden. Außerdem muß das Lenksystem entsprechend diesen maximal auftretenden Lenkkräften dimensioniert werden.

Aufgabe der Erfindung ist es, ein Verfahren aufzuzeigen, mit dem der Energiebedarf für Lenkmanöver an einem festgestellten Fahrzeug reduziert werden kann.
Diese Aufgabe wird durch die Merkmale des Anspruchs 1 gelöst. Kemgedanke ist es hierbei, bei Lenkbewegungen am festgebremsten Fahrzeug die Bremskraft an der Vorderachse des Kraftfahrzeuges zu reduzieren. Hierdurch ergeben sich Vorteile hinsichtlich des Energiebedarfes während der Lenkvorgänge, beispielsweise bei Parkiervorgängen. Durch das erfindungsgemäße Verfahren wird in dem für die Auslegung einer Hilfskraft- oder Fremdkraftlenkanlage ohnehin kritischen Zustand des stehenden Fahrzeuges, bei dem hohe Lenkkräfte auftreten, eine Reduzierung der Lenkkräfte erreicht. Somit kann die Lenkanlage entsprechend schwächer dimensioniert werden, mit Vorteilen hinsichtlich Energieaufnahme, Gewicht, Größe, Herstellkosten etc. Die Reduzierung der Lenkkräfte ist insbesondere bei elektrischen Hilfskraftlenkanlagen und rein fremdkraftbetätigten Systemen, wie beispielsweise steer-by-wire-Systemen, von großer Bedeutung.

Zwar ist grundsätzlich ein Eingriff in das Bremssystem eines Fahrzeuges in Abhängigkeit von einem Lenkmanöver bekannt, und zwar in Form der sog. Lenkbremsanlagen für Acker-Schlepper oder dgl., wozu beispielsweise auf die EP 0 275 985 A oder die EP 0 314 641 A verwiesen wird, jedoch unterscheiden sich diese bekannten Systeme signifikant von der vorliegenden Erfindung.

Das erfindungsgemäße Verfahren kann bei allen "aktiven Bremssystemen" verwendet werden, die mit Aktuatoren arbeiten, die unabhängig von der Pedalbetätigung durch den Fahrer angesteuert werden können.

Die erfindungsgemäße Reduzierung der Feststellkraft an der Vorderachse kann bei einem auf geneigter Fahrbahn abgestellten Fahrzeug zu einer nicht mehr ausreichenden Feststellwirkung führen. Deshalb wird gemäß Anspruch 2 vorgeschlagen, den Bremskraftverlust an der Vorderachse im Bedarfsfall durch eine gleichzeitig erfolgende Erhöhung der Bremskraft an der Hinterachse des Fahrzeuges zu kompensieren, um insgesamt eine ausreichende Feststellwirkung für das Fahrzeug zu gewährleisten.

Gemäß Anspruch 3 erfolgt die Bremskraftreduzierung an der Vorderachse in Abhängigkeit vom Lenkwinkel der Vorderräder. Die Funktion zwischen Lenkwinkel und Bremskraft kann dabei grundsätzlich beliebig definiert werden, um je nach Lenkwinkel ein entsprechendes zugehöriges Lenkmoment zu erhalten. Beispielsweise wird nach Anspruch 4 vorgeschlagen, mit zunehmendem Lenkwinkel die an der Vorderachse aufgebrachte Lenkkraft kontinuierlich zu reduzieren, um den Lenkvorgang bei stärker eingeschlagenen Vorderrädern weiter zu erleichtern.
Daneben ist es ebenso möglich, die Bremskraftverteilung in Abhängigkeit von der Lenkwinkel-Änderungsgeschwindigkeit dα/dt zu verändern.

Bei der Bremskraftverteilung wird gemäß Anspruch 5 die Neigung des Fahrzeugs berücksichtigt, um in jedem Fall ein Wegrollen des Fahrzeugs zu verhindern. Auch die Masse des Fahrzeugs (Zuladung, Anhängerbetrieb etc.) kann zur Bemessung der Bremskraft herangezogen werden (Anspruch 6). Selbstverständlich können noch weitere Einflußfaktoren zur Bemessung der Bremskraft verwendet werden, wie beispielsweise die Temperatur der Bremsenkomponenten, fahrzeugspezifische Besonderheiten einzelner Modellvarianten eines Fahrzeugtyps, das Maß der gewünschten Lenkkraftunterstützung etc.

Zur Erhöhung der Bremskraft an der Hinterachse des Kraftfahrzeuges ist es möglich, ein Feststellbrems-System, das üblicherweise nur bei Verlassen des Fahrzeuges (z. B. elektromotorisch) aktiviert wird, zusätzlich zur Erhöhung der Feststellwirkung an der Hinterachse einzusetzen (Anspruch 7). Hierdurch kann an der Hinterachse in erhöhtem Maße Bremskraft aufgebracht werden, um die Bremskraft an der Vorderachse und damit die Lenkkräfte weiter reduzieren zu können. Zum bekannten Stand der Technik bezüglich eines Feststellbrems-Systems wird lediglich beispielhalber auf die EP 0 456 097 A oder auf die EP 0 595 510 A verwiesen.

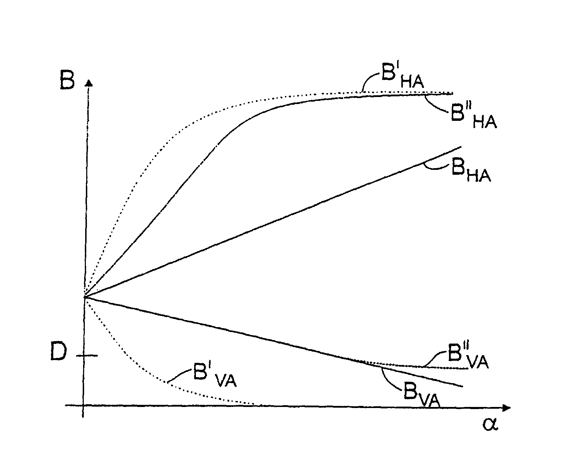

In der Zeichnung ist ein Diagramm wiedergegeben, das die Bremskraftverteilung an der Vorder- bzw. Hinterachse eines Kraftfahrzeuges in Abhängigkeit vom Lenkwinkel zeigt

An der Abszisse des Diagrammes ist der Lenkwinkel α der Räder der Vorderachse, an der Ordinate die Bremskraft B aufgetragen. Ausgehend von einem Lenkwinkel α = 0, bei dem die Bremskraft B_{VA} an der Vorderachse gleich der Bremskraft B_{HA} an der Hinterachse ist, wird bei Einleitung einer Lenkbewegung die Bremskraft B_{VA} an der Vorderachse zurückgenommen. Gleichzeitig wird die Bremskraft B_{HA} an der Hinterachse erhöht, wobei im gewählten Beispiel B_{VA} und B_{HA} linear zusammenhängen. Die Steigung der beiden Bremskraftverläufe B_{VA} und B_{HA} ist unterschiedlich, um die im vorliegenden Beispiel ungleichen wirksamen Bremsbetägflächen an Vorderund Hinterachse des Fahrzeugs zu kompensieren.

Durch den kontinuierlichen Verlauf der Bremskraft B_{VA} bzw. B_{HA} über dem Lenkwinkel α wird diese stufenlose Verlagerung der Bremskraft von der Vorder- zur Hinterachse erreicht und verhindert, daß der Komfort der Fahrzeuginsassen durch nach außen spürbare Reaktionen oder durch auftretende Geräusche beeinträchtigt wird.

Abweichend hiervon kann selbstverständlich auch eine Sprungfunktion oder zumindest ein deutlich steilerer Kurvenverlauf vorgesehen werden, um die Lenkkräfte auch bei kleinen Lenkwinkeln signifikant zu reduzieren. So zeigen die strichpunktiert wiedergegebenen Verläufe B_{VA}, bzw. B_{HA}, eine Bremskraftverteilung, bei der bereits bei relativ kleinen Lenkwinkeln α die Bremskraft B_{VA}, vollkommen zurückgenommen wird, um die Lenkkräfte maximal zu reduzieren.

Ferner ist im Diagramm der Verlauf der Bremskraft B_{VA"} bzw. B_{HA"} bei einem Neigungswinkel des Fahrzeugs β > 0 wiedergegeben (gestrichelte Linien). Hierbei sind gegenüber der Feststellung des Fahrzeugs auf einer waagrechten Fahrbahn höhere Feststellkräfte aufzubringen, um das Fahrzeug am Wegrollen zu hindem. Hierbei ist eine Reduzierung der Bremskraft B_{VA"} an der Vorderachse unter den Wert D nicht möglich, da andernfalls die an der Hinterachse aufbringbare Bremskraft B_{HA"} alleine nicht mehr ausreichen würde, um das Fahrzeug sicher zu halten. Alternativ kann anstelle der Mindestkraft D an der Vorderachse zusätzlich Bremskraft über eine unabhängig arbeitende Feststellbremseinrichtung aufgebracht werden. Alternativ kann anstelle der Mindestkraft D an der Vorderachse über eine unabhängig arbeitende Feststellbremseinrichtung zusätzlich Bremskraft an der Hinterachse aufgebracht werden.

## Patentansprüche

1. Verfahren zur Bemessung der Bremskraft an einer Vorderachse und einer Hinterachse eines durch selbsttätigen Bremseneingriff festgestellten Fahrzeugs, bei dem bei Aufbringung von Lenkbewegungen an den Rädern der Vorderachse die Bremskraft (B_{VA}) an der Vorderachse verringert wird.

2. Verfahren nach Anspruch 1,
**dadurch gekennzeichnet, daß** gleichzeitig die Bremskraft (B_{HA}) an der Hinterachse erhöht wird, um die Verringerung der Bremskraft (B_{VA}) an der Vorderachse auszugleichen.

3. Verfahren nach Anspruch 1 und/oder 2,
**dadurch gekennzeichnet, daß** die Bemessung der Bremskraft (B_{VA} bzw. B_{HA}) in Abhängigkeit vom Lenkwinkel (α) der Räder an der Vorderachse erfolgt.

4. Verfahren nach Anspruch 3,
**dadurch gekennzeichnet, daß** mit zunehmendem Lenkwinkel (α) die Bremskraft (B_{VA}) an der Vorderachse kontinuierlich verringert und gegebenenfalls die Bremskraft (B_{HA}) an der Hinterachse entsprechend erhöht wird.

5. Verfahren nach einem der vorgenannten Ansprüche,
**dadurch gekennzeichnet, daß** die Bemessung der Bremskraft (B_{VA} bzw. B_{HA}) in Abhängigkeit vom Neigungswinkel (β) des Fahrzeugs erfolgt.

6. Verfahren nach einem der vorgenannten Ansprüche,
**dadurch gekennzeichnet, daß** die Bemessung der Bremskraft (B_{VA} bzw. B_{HA}) in Abhängigkeit von der Masse des Fahrzeugs erfolgt.

7. Verfahren nach einem der vorgenannten Ansprüche,
**dadurch gekennzeichnet, daß** die Bremskraft (B_{HA}) an der Hinterachse des Kraftfahrzeuges zumindest teilweise von einer Feststellbremseinrichtung aufgebracht wird.

## Claims

1. A method of determining the braking force on a front axle and a rear axle of a vehicle immobilised by automatic brake engagement, wherein the braking force (B_{VA}) on the front axle is reduced when steering movements are applied to the wheels on the front axle.

2. A method according to claim 1, **characterised in that** the braking force (B_{HA}) on the rear axle is simultaneously increased in order to compensate the reduction of braking force (B_{VA}) on the front axle.

3. A method according to claim 1 and/or 2, **characterised in that** the braking force (B_{VA}) and/or (B_{HA}) is determined in dependence on the steering axle (α) of the wheels on the front axle.

4. A method according to claim 3, **characterised in that** as the steering angle (α) increases, the braking force (B_{VA}) on the front axle is continuously reduced and the braking force (B_{HA}) on the rear axle is correspondingly increased if required.

5. A method according to any of the preceding claims, **characterised in that** the braking force (B_{VA}) and/or (B_{HA}) is determined in dependence on the angle of inclination (β) of the vehicle.

6. A method according to any of the preceding claims, **characterised in that** the braking force (B_{VA}) and/or (B_{HA}) is determined in dependence on the weight of the vehicle.

7. A method according to any of the preceding claims, **characterised in that** the braking force (B_{HA}) on the rear axle of the vehicle is applied at least partly by a parking brake device.

## Revendications

1. Procédé de dimensionnement de la force de freinage sur un essieu avant et un essieu arrière d'un véhicule immobilisé par une action automatique de freinage,
**caractérisé en ce que**
lorsque des mouvements de braquage ont lieu sur les roues de l'essieu avant, la force de freinage (B_{VA}) sur cet essieu est réduite.

2. Procédé selon la revendication 1,
**caractérisé en ce que**
en même temps la force de freinage (B_{HA}) sur l'essieu arrière est augmentée, pour compenser la réduction de la force de freinage (B_{VA}) sur l'essieu avant.

3. Procédé selon la revendication 1 ou 2,
**caractérisé en ce que**
le dimensionnement des forces de freinage (B_{VA} ou B_{HA}) est effectué en fonction de l'angle de braquage (α) des roues de l'essieu avant.

4. Procédé selon la revendication 3,
**caractérisé en ce que**
quand l'angle de braquage (α) croît, la force de freinage (B_{VA}) sur l'essieu avant diminue continuellement et, éventuellement, la force de freinage (B_{HA}) sur l'essieu arrière est augmentée en correspondance.

5. Procédé selon l'une des revendications précédentes,
**caractérisé en ce que**
le dimensionnement des forces de freinage (B_{V} ou B_{HA}) est fonction de l'angle d'inclinaison (β) du véhicule.

6. Procédé selon l'une des revendications précédentes,
**caractérisé en ce que**
le dimensionnement des forces de freinage (B_{VA} ou B_{HA}) est fonction de la masse du véhicule.

7. Procédé selon l'une des revendications précédentes,
**caractérisé en ce que**
la force de freinage (B_{HA}) sur l'essieu arrière du véhicule est fournie, au moins en partie, par un dispositif de freinage d'immobilisation.
